# EUROPEAN PATENT APPLICATION

(11) **EP 2 578 293 A1**
(43) Date of publication of application: **10.04.2013**
(21) Application number: 11789946.8
(22) Date of filing: 31.05.2011
(51) Int. Cl.: B01D 53/62, C01B 31/20

(54) **EXHAUST GAS TREATMENT SYSTEM AND METHOD**

(30) Priority: 31.05.2010 JP 2010125389
(71) Applicant: Mitsubishi Heavy Industries, Ltd., Tokyo 108-8215 (JP)
(72) Inventor: NAGAYASU, Tatsuto, Tokyo 108-8215 (JP); KAMIJO, Takashi, Tokyo 108-8215 (JP); INUI, Masayuki, Tokyo 108-8215 (JP); OISHI, Tsuyoshi, Tokyo 108-8215 (JP); NAGAYASU, Hiromitsu, Tokyo 108-8215 (JP); TANAKA, Hiroshi, Tokyo 108-8215 (JP); HIRATA, Takuya, Tokyo 108-8215 (JP); TSUJIUCHI, Tatsuya, Tokyo 108-8215 (JP); OKINO, Susumu, Tokyo 108-8215 (JP); KAMIYAMA, Naoyuki, Tokyo 108-8215 (JP); YOSHIHARA, Seiji, Tokyo 108-8215 (JP)
(74) Representative: Intès, Didier Gérard André
(86) International application number: PCT/JP2011/062866
(87) International publication number: WO 2011/152546

(57) **Abstract**

SOₓ removal equipment 15 which reduces sulfur oxides from flue gas 12 from a boiler 11, a cooler 16 which is provided on the downstream side of the SOₓ removal equipment 15 so as to reduce the sulfur oxides from the flue gas and decrease a gas temperature, CO₂ recovery equipment 17 which includes an absorber for bringing CO₂ in the flue gas into contact with a CO₂ absorption liquid so as to be reduced and a regenerator for causing the CO₂ absorption liquid to emit CO₂ so as to recover CO₂ and regenerate the CO₂ absorption liquid, and demister 26 for reducing a mist generation material which is a generation source of mist that is generated in the absorber of the CO₂ recovery equipment before introducing the flue gas to the CO₂ recovery equipment, are included.

## Description

### Field

The present invention relates to an air pollution control system and method that reduce CO₂ from flue gas.

### Background

In recent years, the greenhouse effect due to CO₂ is indicated as one of clauses of the global warming phenomenon, and the countermeasures thereof become an internationally urgent matter to protect the global environment. CO₂ generation sources reach all human activity fields in which fossil fuels are burned, and there is a tendency to further strengthen the demand for suppression of the discharge thereof. For this, for a power generation facility such as a thermal power plant that uses a large amount of fossil fuels, a method of bringing combustion flue gas of an industrial facility such as a boiler or a gas turbine into contact with an amine-based CO₂ absorption liquid to reduce and recover CO₂ from the combustion flue gas and an air pollution control system which stores the recovered Co₂ without emission to air has been energetically researched.

CO₂ recovery equipment which has, as the process of reducing and recovering CO₂ from the combustion flue gas using a CO₂ absorption liquid as described above, a process of bringing the combustion flue gas into contact with the CO₂ absorption liquid in a CO₂ absorber (hereinafter, also simply referred to as "absorbed"), and a process of heating the CO₂ absorption liquid that adsorbs CO₂ in an absorption liquid regenerator (hereinafter, also simply referred to as "regenerator") to emit CO₂ and regenerate the CO₂ absorption liquid so as to be circulated through the CO₂ absorber to be reused, is proposed for example, Patent Literature 1).

In the CO₂ absorber, through countercurrent contact using an amine-based CO₂ absorption liquid, such as alkanolamine, CO₂ in the flue gas is absorbed by the CO₂ absorption liquid in a chemical reaction (exothermic reaction), and the flue gas from which CO₂ is reduced is emitted to the outside of the system. The CO₂ absorption liquid that absorbs CO₂ is also called a "rich solution". The rich solution is pressurized by a pump, is heated in a heat exchanger by a high-temperature CO₂ absorption liquid (lean solution) regenerated as CO₂ is emitted in the regenerator, and is supplied to the regenerator.

### Citation List

### Patent Literature

Patent Literature 1: Japanese Laid-open Patent Publication No. 3-193116

### Summary

### Technical Problem

However, in the air pollution control system, in a case where a mist generation material that is a generation source of mist generated in the absorber of the CO₂ recovery equipment is included in the flue gas introduced to the CO₂ absorber that absorbs CO₂ in the CO₂ recovery equipment, there is a problem in that the CO₂ absorption liquid is entrained by the mist generation material and thus the amount of CO₂ absorption liquid that scatters to the outside of the system is increased.
Such a case, where the scattering of the CO₂ absorption liquid to the outside of the system occurs, is connected to a significant loss of the CO₂ absorption liquid, and an unnecessary amount of the CO₂ absorption liquid has to be replenished. Therefore, the scattering of the CO₂ absorption liquid to the outside of the system needs to be suppressed.

Here, the establishment of an air pollution control system which suppresses the scattering of a CO₂ absorption liquid from a CO₂ absorber is desired.

In order to solve the problem, an object of the present invention is to provide an air pollution control system and method capable of significantly reducing entraining of a CO₂ absorption liquid when flue gas from which CO₂ is reduced is discharged to the outside of a system, and performing an appropriate air pollution control. Solution to Problem

According to a first aspect of invention in order to solve the abode problems, there is provided an air pollution control system including: SOₓ removal equipment which reduces sulfur oxides from flue gas from a boiler; a cooler which is provided on a downstream side of the SOₓ removal equipment so as to reduce the sulfur oxides that remain in the flue gas and decrease a gas temperature; CO₂ recovery equipment which includes an absorber for bringing CO₂ in the flue gas into contact with a CO₂ absorption liquid so as to be reduced, and a regenerator for causing the CO₂ absorption liquid to emit CO₂ so as to recover CO₂ and regenerate the CO₂ absorption liquid; and a demister which reduces a mist generation material which is a generation source of mist that is generated in the absorber of the CO₂ recovery equipment before introducing the flue gas to the CO₂ recovery equipment.

According to a second aspect of invention, there is provided the air pollution control system according to the first aspect, further including: NOₓ removal equipment which reduces nitrogen oxides from the flue gas; and a dry type electric dust collector which reduces particulates.

According to a third aspect of invention, there is provided the air pollution control system according to the first or second aspect, wherein the demister is provided in a top portion of the cooler.

According to a fourth aspect of invention, there is provided an air pollution control method including: on an upstream side of CO₂ recovery equipment which brings CO₂ in flue gas into contact with a CO₂ absorption liquid so as to be absorbed and reduced, on an outlet side or a downstream side of a cooler which decreases a temperature of the flue gas, capturing mist in the flue gas by a demister; and decreasing an amount or mist generation material in the flue gas introduced to the CO₂ recovery equipment to a predetermined amount or less.

### Advantageous Effects of invention

According to the air pollution control system of the present invention, since the dissolved salt spraying equipment is provided as the demister before the introduction to the CO₂ recovery equipment, the amount of mist generation material in the flue gas when being introduced to the CO₂ absorber is significantly decreased. As a result, the amount of CO₂ absorption liquid that is entrained by mist and scatters to the outside of the system is decreased. Therefore, the loss of the CO₂ absorption liquid that scatters to the outside of the system may be significantly decreased, and an increase in running cost during the air pollution control may be suppressed.

### Brief Description of Drawings

FIG. 1 is a schematic diagram of an air pollution control system of an embodiment according to the present invention.
FIG. 2 is a conceptual diagram of a mechanism of mist generation.
FIG. 3-1 is a photograph illustrating a state where white smoke is decreased in a CO₂ absorber.
FIG. 3-2 is a photograph illustrating a state where white smoke is generated in the CO₂ absorber.
FIG. 4 is a schematic diagram of the air pollution control system according to a first embodiment.
FIG. 5 is a schematic diagram of another air pollution control system according to the first embodiment.

### Description of Embodiments

Hereinafter, the present invention will be described in detail with preference to the drawings. Note that, the present invention is not limited by embodiments and examples. In addition, components in the embodiments and the examples include those that may be easily assumed by those skilled in the art or are practically the same.

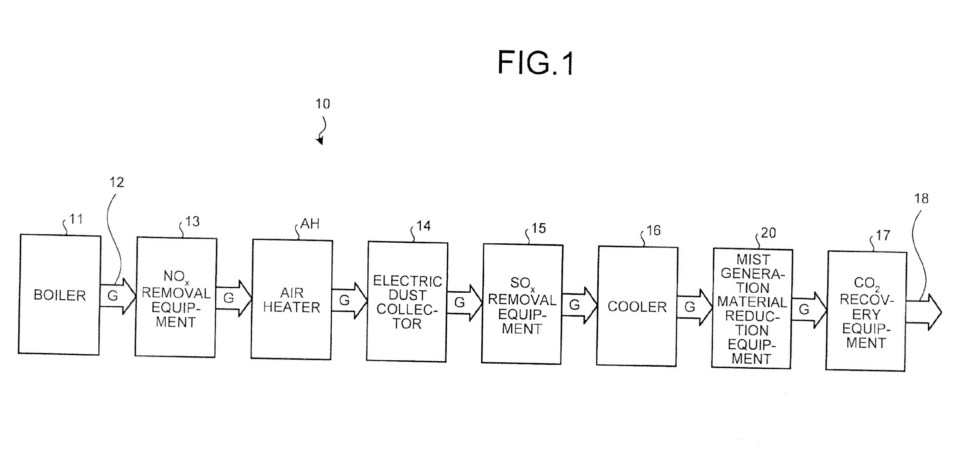

FIG. 1 is a schematic diagram of an air pollution control system of an embodiment according to the present invention.
As illustrated in FIG. 1, in an air pollution control system 10 of the embodiment according to the present invention, flue gas 12 from a boiler 11 is subjected to a reduction in nitrogen oxides (NOₓ) from the flue gas 12 by NOₓ removal equipment 13, and thereafter is first guided to an air heater AH to heat air supplied to the boiler 11. Thereafter, the flue gas 12 is introduced to a dry type electric dust collector 14 which is dust reduction equipment so as to reduce particulates. Next, the flue gas 12 is introduced to SOₓ removal equipment 15 to reduce sulfur oxides (SOₓ). Then, the flue gas 12 is cooled by a cooler 16, is thereafter introduced to CO₂ recovery equipment 17 to reduce carbon dioxide, and purified gas 18 is emitted from the top portion of a CO₂ absorber to the air which is outside the system. Note that, the particulates reduced by the electric dust collector 14 are subjected to an additional ash treatment 14a.

In the present invention, before introducing the flue gas 12 to the CO₂ recovery equipment 17, mist generation material reduction equipment 20 which reduces a mist generation material that is a generation source of mist generated in the CO₂ absorber of the CO₂ recovery equipment 17 is provided.

According to the air pollution control system according to the present invention, since the mist generation material reduction equipment 20 is provided before the introduction to the CO₂ recovery equipment 17, the amount of mist generation material in the flue gas 12 when being introduced to the CO₂ absorber of the CO₂ recovery equipment 17 is significantly decreased. As a result, the amount of CO₂ absorption liquid (hereinafter, also referred to as "absorption liquid") entrained by mist and dispersed to the outside may be significantly decreased. As a result, the loss of the absorption liquid that scatters to the outside of the system is significantly decreased, and thus an unnecessary replenishment is eliminated, thereby suppressing an increase in running cost during the air pollution control.

The mist generation material reduced by the mist generation material reduction equipment 20 according to the present invention is SO₃ mist, nitric acid mist, hydrochloric acid mist, water vapor mist, or the like and is referred to as a material that becomes a mist generation factor in the CO₂ absorber. Note that, equipment that performs a reduction in a gas state before becoming mist is also included in the mist generation material reduction equipment 20 according to the present invention.

Since the flue gas 12 from the boiler 11 is in a high-temperature state, the mist generation material is present in a gas state at first. Thereafter, in a process of passing through the electric dust collector and the SOₓ removal equipment, the flue gas is cooled, and thus the mist generation material change from the gas state to a mist state.
The particle size of the mist of the mist generation material in the present invention is referred to as a size of equal to or smaller than 3.0 µm.

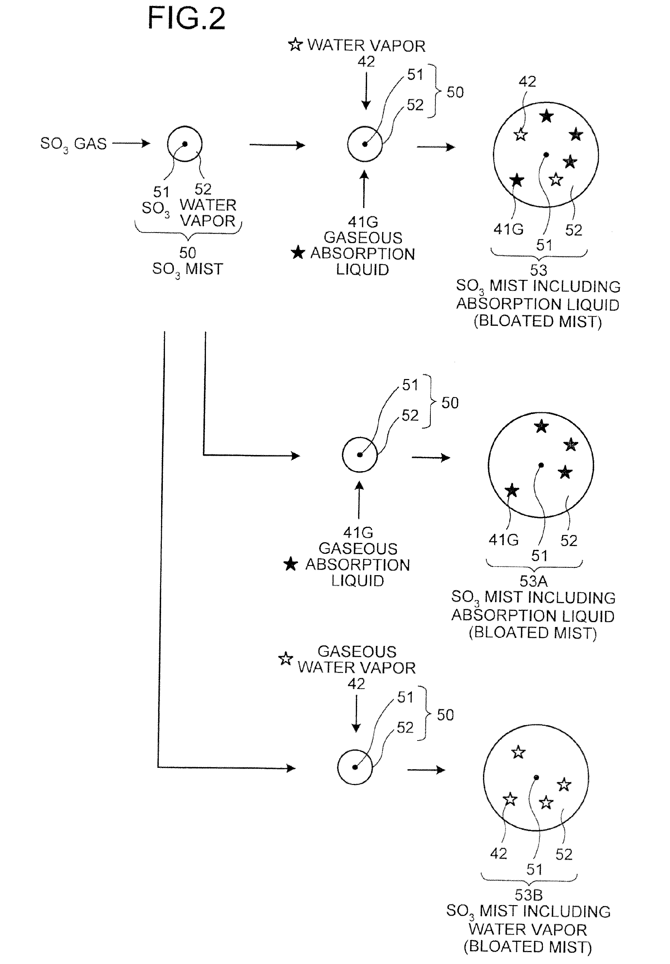

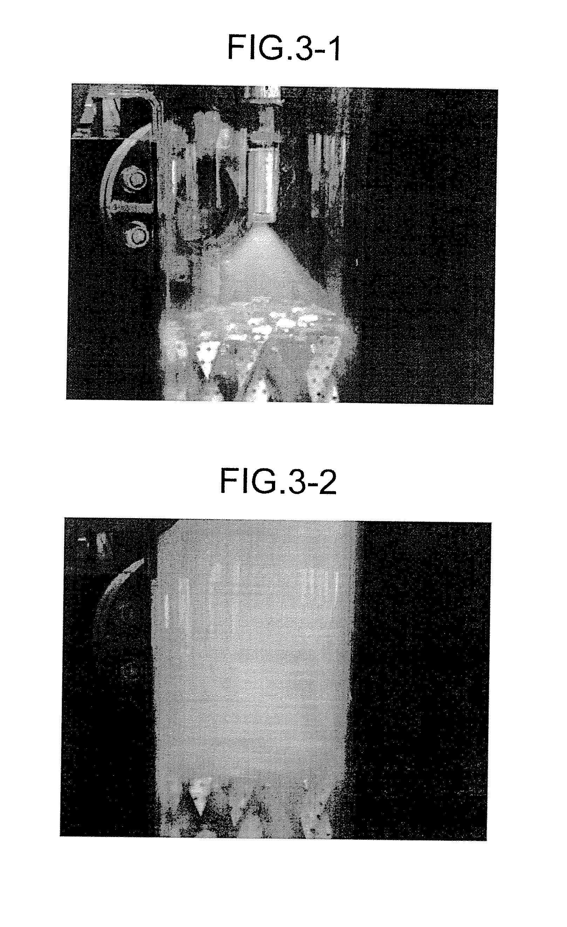

The form of mist generation and entraining of the absorption liquid in the CO₂ absorber of the CO₂ recovery equipment 17 will be described using FIGS. 2, 3-1, and 3-2.
FIG. 2 is a conceptual diagram of a mechanism of entraining of the absorption liquid by mist generation. FIG. 3-1 is a photograph illustrating a state where white smoke is decreased in the CO₂ absorber, and FIG. 3-2 is a photograph illustrating a state where white smoke is generated in the CO₂ absorber. Although, SO₃ mist is exemplified as the mist generation material in the description, descriptions with other kinds of mist will be the same. The flue gas 12 from the boiler 11 is subjected to a gas purifying treatment such as removal, a reduction in particulates, and removal, and the flue gas 12 is cooled by the cooler 16, resulting in a gas temperature of about 50 Since this temperature state is equal to or less than the acid dew point, there is SO₃ mist (for example, 0.1 to 1.0 µm).
A SO₃ mist 50 has SO₃ as a nucleus 51 and water vapor 52 that is present in the periphery thereof such as clouds.
The SO₃ mist 50 has SO₃ as a nucleus 51 and water vapor 52 that is incorporated into the periphery thereof.

In the CO₂ absorber, the absorption liquid is sprayed from nozzles and falls, and the falling absorption liquid and the flue gas are subjected to countercurrent contact such that CO₂ is absorbed by the absorption liquid. On the other hand, the flue gas 12 is introduced from the lower side of the CO₂ absorber and is discharged to the upper side. Here, the SO₃ mist 50 is not absorbed by the absorption liquid and ascends along with the gas stream of the flue gas 12.

Here, in the CO₂ absorber, when the absorption liquid is supplied from the nozzles, the absorption liquid falls and a part of the absorption liquid and moisture evaporates, and thus a gaseous absorption liquid 41G and water vapor 42 are generated.
In addition, the amount of gaseous absorption liquid 41G and the water vapor 42 further increases as the temperature of the absorption liquid is increased due to, for example, the exothermic reaction of the absorption liquid when CO₂ is absorbed.

Then, the gaseous absorption liquid 41G and the water vapor 42 are incorporated into the SO₃ mist 50, resulting in a SO₃ mist (bloated mist) 53 including a bloated (for example, about 0.5 to 2.0 µm) absorption liquid.

As described above, the SO₃ mist 50 in the flue gas 12, before being introduced to the CO₂ recovery equipment 17, incorporates the gaseous absorption liquid 41G and the water vapor 42 in the CO₂ absorber, becomes the SO₃ mist 53 including the absorption liquid, and scatters from the top portion of the CO₂ absorber while being entrained by the flue gas 12. Therefore, the loss of the absorption liquid occurs.

The form of white smoke generation in the CO₂ absorber is illustrated in FIGS. 3-1 and 3-2.
FIG. 3-1 illustrates a case where the amount of mist generation material is decreased to a predetermined amount or less by providing the mist generation material reduction equipment 20 for the flue gas 12 introduced to the CO₂ absorber and a state where the scattering of the SO₃ mist (bloated mist) 53 including the absorption liquid in the CO₂ absorber is significantly reduced and thus generation of white smoke is suppressed. FIG. 3-2 illustrates a case where the flue gas 12 is introduced as it is without providing the mist generation material reduction equipment 20 for the flue gas 12 introduced to the CO₂ absorber and a state where the scattering of the SO₃ mist (bloated mist) 53 including the absorption liquid in the CO₂ absorber occurs and thus white smoke is generated.

That is, in the present invention, the mist generated in the CO₂ absorber is referred to as the SO₃ mist (bloated mist) 53 including the absorption liquid. Confirming the presence or absence of the generation of bloated mist is referred to as the presence or absence of generation of white smoke, and by suppressing the bloated mist in the CO₂ absorber, generation of white smoke is eliminated. Furthermore, the scattering of the absorption liquid is prevented.

In addition, regarding the bloated mist, as illustrated in FIG. 2, there may be cases where the gaseous absorption liquid 41G and the gaseous water vapor 42 are separately incorporated into the SO₃ mist 50 in the flue gas 12 in the CO₂ absorber to respectively form a SO₃ mist (bloated mist) 53A including the absorption liquid and a SO₃ mist (bloated must) 53B including the water vapor.
Here, in the case of the mist (bloated mist) 53B including the water vapor, there is no loss of the absorption liquid. However, since generation of white smoke of the purified gas 18 to be discharged to the outside of a system occurs, a reduction in the mist generation material is also needed.
Therefore, according to the present invention, by providing the mist generation material reduction equipment 20 before introduction to the CO₂ recovery equipment 17, entraining of the CO₂ absorption liquid may be significantly reduced when the flue gas 12 from which CO₂ is reduced is discharged to the outside on the system, and an appropriate ail pollution control may be performed.

Therefore, in the present invention, by providing the mist generation material reduction equipment 20 that reduces the mist generation material which is the generation source of the mist (the SO₃ mist including the absorption liquid which is the bloated mist) generated in the CO₂ absorber of the CO₂ recovery equipment 17 before introducing the flue gas 12 to the CO₂ recovery equipment 17, the loss of the absorption liquid that scatters to the outside of the system from the CO₂ absorber may be significantly decreased.

The mist generation material reduction equipment 20 may be provided on the upstream side of the dry type electric dust collector 14, between the dry type electric dust collector 14 and the SOₓ removal equipment 15, or in either of the front and the rear of the cooler 16, or to be integrated into the cooler 16.
Here, before introducing the flue gas 12 to the CO₂ recovery equipment 17, it is preferably that the amount of SO₃ mist 50 be decreased to 3 ppm or less for prevention of white smoke and prevention of scattering of the absorption liquid in the CO₂ absorber. This is because when the amount of SO₃ mist 50 is decreased to 3 ppm or less, scattering prevention is suppressed, and deterioration of, for example, an amine-based absorption liquid due to SO₃ is prevented.

According to the present invention, since the scattering of the absorption liquid is prevented and the deterioration of the absorption liquid is prevented, a decrease in the number of regeneration treatments performed in the regeneration equipment (reclaiming equipment) for the absorption liquid may be achieved, and the loss of the absorption liquid is further significantly decreased, so that a decrease in the amount of the replenished absorption liquid may be achieved. Therefore, the system efficiency of the air pollution control system may be significantly enhanced.

Note that, in this embodiment, the electric dust collector is exemplified as the dust reduction equipment in the description. However, the present invention is not limited to this as long as particulates are reduced from the flue gas 12, and besides the electric dust collector, for example, a bag filter or a venturi scrubber may be exemplified.

In the following embodiment, a specific form of the mist generation material reduction equipment that reduces the mist generation material will be described.

### First Embodiment

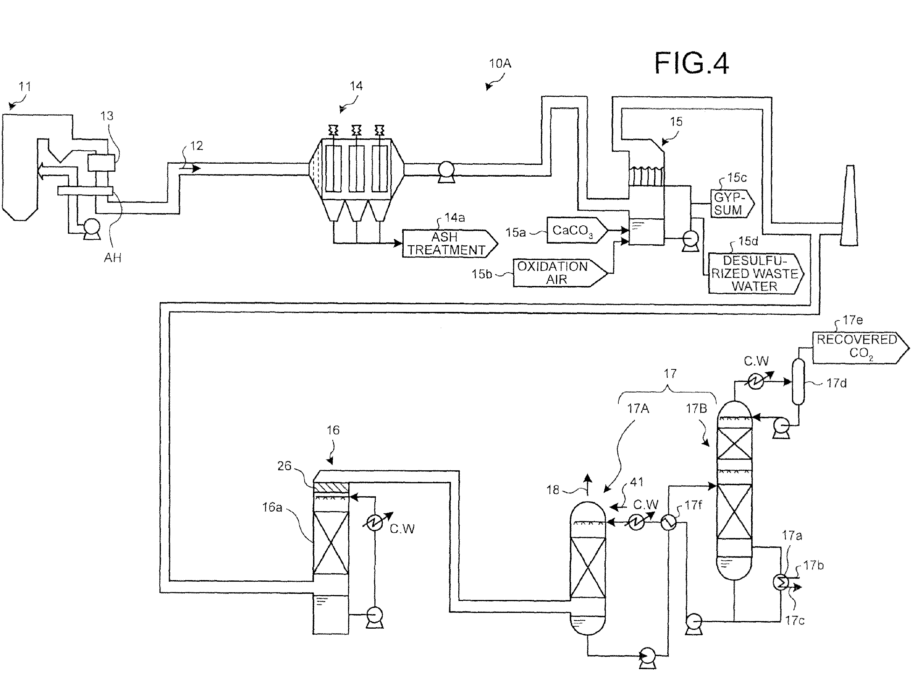

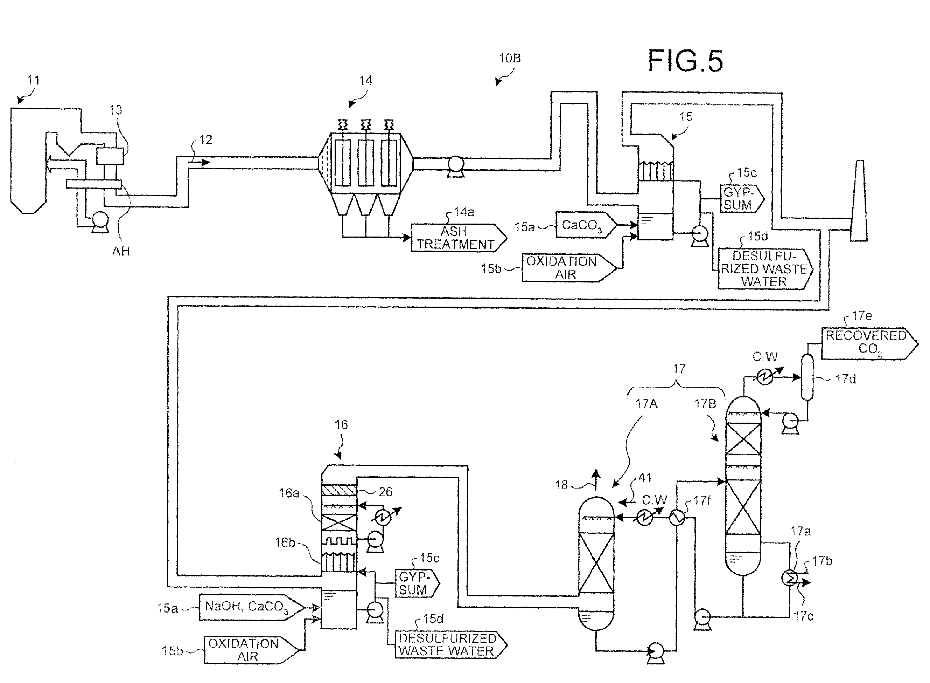

The air pollution control system including the CO₂ recovery equipment according to an embodiment of the present invention will be described with reference to the drawings. FIG. 4 is a schematic diagram of the air pollution control system according to the first embodiment. FIG. 5 is a schematic diagram of another air pollution control system according to the first embodiment. Note that, in the following embodiment, SO₃ is exemplified as the mist generation material in the description, but the present invention is not limited thereto.
As illustrated in FIG. 4, an air pollution control system 10A according to the first embodiment includes the NOₓ removal equipment 13 which reduces nitrogen oxides from the flue gas 12 from the boiler (for example, coal-fired boiler) 11, the electric dust collector 14 which is provided on the downstream side of the NOₓ removal equipment 13 and reduces particulates from the flue gas 12, the SOₓ removal equipment 15 which is provided on the downstream side of the electric dust collector 14 and reduces sulfur oxides from the flue gas 12, the cooler 16 which is provided on the downstream side of the SOₓ removal equipment 15 and has a cooling unit 16a that decreases the gas temperature, and the CO₂ recovery equipment 17 which includes an absorber 17A that brings CO₂ in the flue gas 12 into contact with the absorption liquid so as to be reduced and a regenerator 17B that causes the absorption liquid to emit CO₂ to recover the CO₂ and regenerate the absorption liquid.

In this embodiment, before introducing the SO₃ mist to the CO₂ recovery equipment 17, as a countermeasure to reduce the mist generation material, a demister 26 is provided inside the cooler 16. The demister 26 according to this embodiment functions as the mist generation material reduction equipment 20 illustrated in FIG. 1.

By providing the demister 26 at the top portion on the upper side of the downstream of the cooling unit 16a captured and reduced. In this embodiment, as gas 12 may be captured and reduced. In this embodiment, as a result of reducing SO₃ in the mist state which is the mist generation material from the flue gas 12, a decrease in the amount of the SO₃ mist introduced to the CO₂ recovery equipment 17 is achieved. Therefore, the generation of white smoke of the purified gas 18 discharged from the absorber 17A, which is caused by the mist, is suppressed, and the entraining of the absorption liquid 41 is suppressed. As a result, an air pollution control system in which there is no loss of the absorption liquid 41 may be provided.

In this embodiment, the wire diameter of the wire mesh that constitutes the demister 26 may be 1 to 20 µm, and more preferably 3 to 10 µm, but the present invention is not limited thereto. In addition, it is preferable that the void fraction of the demister 26 be about 90 to 97%, but the present invention is not limited thereto.

In this embodiment, the demister 26 is provided on the outlet side of the cooler 16. However, equipment including the demister 26 may also be separately installed on the downstream side of the cooler 16.

In addition, the flue gas 12 from which particulates are reduced in the electric dust collector 14 is subjected to a reduction in sulfur oxides from the flue gas 12 in the SOₓ removal equipment 15, the reduced sulfur oxides are supplied with limestone (CaCO₃) 15a and oxidation air 15b to become gypsum 15c through a limestone-gypsum method, and desulfurized waste water 15d is additionally treated. Note that, in the figures, reference numerals 17a, 17b, 17c, 17d, 17e, and 17f denote a reboiler, saturated water vapor, condensed water, a separation drum, recovered CO₂, and a heat exchanger, respectively.

The flue gas 12 desulfurized by the SOₓ removal equipment 15 is cooled by the cooler 16 to cause the flue temperature to be 50°C or less, and is introduced to the CO₂ recovery equipment 17 including the absorber 17A and the regenerator 17B. Here, CO₂ in the flue gas 12 is reduced by, for example, the amine-based absorption liquid 41. Here, in this embodiment, as a result of reducing SO₃ in the gas state which is the mist generation material from the flue gas 12, a decrease in the amount of the SO₃ mist introduced to the CO₂ recovery equipment 17 is achieved. Therefore, the generation of white smoke of the purified gas 18 discharged from the absorber 17A, which is caused by the mist, is suppressed, and the entraining of the absorption liquid 41 is suppressed.
As a result, an air pollution control system in which there is no loss of the absorption liquid may be provided.

Here, in this embodiment, the amine-based absorption liquid is exemplified as the absorption liquid. However, the absorption liquid of the present invention is not limited to the amine-based absorption liquid. As the absorption liquid, besides the amine-based absorption liquid, for example, an amino acid-based absorption liquid, an ionic liquid absorption liquid, a hot potassium carbonate absorption liquid made of potassium carbonate and amines, and the like may be exemplified.

FIG. 5 is a schematic diagram of an air pollution control system of a modified example of the first embodiment In the cooler 16 illustrated in FIG. 4, the flue gas 12 is cooled. However, as illustrated in FIG. 5, a finishing SOₓ removal unit 16b is provided at the lower portion of the cooler 16 the limestone (CaCO₃) 15a and the oxidation air 15b are supplied to form the gypsum 15c through the limestone-gypsum method. Accordingly, sulfur oxides that remain in the flue gas 12 from the SOₓ removal equipment 15 is reduced, and thus the SOₓ removal efficiency is further enhanced. Note that, a strong alkaline agent such as sodium hydroxide (NaOH) may be added along with the limestone.
In this embodiment, in the finishing S_{Ox} removal unit 16b, a liquid column type is used as a method of supplying a SOₓ removal absorption liquid. However, the present invention is not limited thereto, and many of sprinkling type, jet type, and filling type may also be used.

Here, as the SOₓ removal absorption; liquid mused in the finishing SOₓ removal unit 16b, besides the limestone (CaCO₃), a strong alkaline agent such as NaOH, Na₂CO₃, NaHCO₃, Ca (OH)₂, or Mg(OH)₂ may be exemplified. By using the strong alkaline agent, further enhancement of the SOₓ removal performance may be achieved, and this is particularly effective in a case where the flue gas 12 having a high sulfur oxide concentration is introduced, thereby decreasing the concentration of sulfur oxides in the flue gas 12 introduced to the CO₂ recovery equipment 17 to an extremely low concentration. The SOₓ removal performance is increased compared to the limestone-gypsum method. Therefore, even in a case where the concentration of sulfur oxides in the introduced flue gas 12 is high, favorable SOₓ removal performance is exhibited, which is preferable.

As described above with the embodiment, according to the present invention, the dissolved salt spraying equipment 23 is provided as the demister 26. Therefore, an air pollution control system in which the absorption liquid 41 is not entrained when the flue gas 12 from which CO₂ is reduced is discharged to the outside may be provided.

### Reference Signs List

- 10, 10A, 10B: AIR POLLUTION CONTROL SYSTEM
- 11: BOILER
- 12: FLUE GAS
- 13: NOx REMOVAL EQUIPMENT
- 14: ELECTRIC DUST COLLECTOR
- 15: SOₓ REMOVAL EQUIPMENT
- 16: COOLER
- 16a: COOLING UNIT
- 16b: FINISHING SOₓ REMOVAL UNIT
- 17: CO₂ RECOVERY EQUIPMENT
- 17A: ABSORBED
- 17B: REGENERATOR
- 18: PURIFIED GAS
- 20: MIST GENERATION MATERIAL REDUCTION EQUIPMENT
- 26: Demister

## Claims

1. An air pollution control system comprising:
SOₓ removal equipment which reduces sulfur oxides from flue gas from a boiler;
a cooler which is provided on a downstream side of the SOₓ removal equipment so as to reduce the sulfur oxides that remain in the flue gas and decrease a gas temperature;
CO₂ recovery equipment which includes an absorber for bringing CO₂ in the flue gas into contact with a CO₂ absorption liquid so as to be reduced, and a regenerator for causing the CO₂ absorption liquid to emit CO₂ so as to recover CO₂ and regenerate the CO₂ absorption liquid; and
a demister which reduces a mist generation material which is a generation source of mist that is generated in the absorber of the CO₂ recovery equipment before introducing the flue gas to the CO₂ recovery equipment.

2. The air pollution control system according to claim 1, further comprising:
NOₓ removal equipment which reduces nitrogen oxides from the flue gas; and
a dry type electric dust collector which reduces particulates.

3. The air pollution control system according to claim 1 or 2,
wherein the demister is provided in a top portion of the cooler.

4. An air pollution control method comprising:
on an upstream side of CO₂ recovery equipment which brings CO₂ in flue gas into contact with a CO₂ absorption liquid so as to be absorbed and reduced,
on an outlet side or a downstream side of a cooler which decreases a temperature of the flue gas, capturing mist in the flue gas by a demister; and
decreasing an amount of mist generation material in the flue introduced to the CO₂ recovery equipment to a predetermined amount or less.
